# EUROPÄISCHE PATENTANMELDUNG

(11) **EP 1 239 301 A1**
(43) Veröffentlichungstag der Anmeldung: **11.09.2002**
(21) Anmeldenummer: 02004866.6
(22) Anmeldetag: 04.03.2002
(51) Int. Cl.: G01S 17/87

(54) **Verfahren und Vorrichtung zur Überwachung einer Schutzzone**

(30) Priorität: 05.03.2001 DE 10110416
(71) Anmelder: Sick AG, 79183 Waldkirch, Breisgau (DE)
(72) Erfinder: Hipp, Johann, 22391 Hamburg (DE)
(74) Vertreter: Manitz, Finsterwald & Partner GbR

(57) **Zusammenfassung**

Die Erfindung betrifft ein Verfahren und eine Vorrichtung zur Überwachung einer Schutzzone, bei dem von einer Vorrichtung ein Lichtstrahl in Richtung der Schutzzone ausgesandt, ein von einem in der Schutzzone befindlichen Objekt reflektierter/remittierter Lichtstrahl empfangen und der Abstand zwischen der Vorrichtung und dem Objekt bestimmt wird, wobei zumindest zwei, einen Winkel zwischen sich einschließende Lichtstrahlen ausgesandt werden, bei innerhalb der Schutzzone vorhandenem Objekt ein erster, von dem Objekt reflektierter/remittierter Lichtstrahl empfangen wird, bei objektfreier Schutzzöne ein zweiter, von einem außerhalb der Schutzzone befindlichen Ort reflektierter/remittierter Lichtstrahl empfangen wird, und der Abstand sowohl des Objekts als auch des zweiten Orts von der Vorrichtung bestimmt wird.

## Beschreibung

Die Erfindung betrifft ein Verfahren zur Überwachung einer Schutzzone, bei dem von einer Vorrichtung ein Lichtstrahl in Richtung der Schutzzone ausgesandt, ein von einem in der Schutzzone befindlichen Objekt reflektierter/remittierter Lichtstrahl empfangen und der Abstand zwischen der Vorrichtung und dem Objekt bestimmt wird. Ferner betrifft die Erfindung eine Vorrichtung zur Überwachung einer Schutzzone mit einer Sendeeinheit zur Aussendung eines Lichtstrahls in Richtung der Schutzzone, einer Empfangseinheit zum Empfang eines von einem in der Schutzzone befindlichem Objekt reflektierten/remittierten Lichtstrahls und einer Auswerteeinheit zur Bestimmung des Abstandes zwischen der Vorrichtung und dem Objekt.

Derartige Verfahren und Vorrichtungen sind aus dem Stand der Technik bekannt und dienen beispielsweise dazu, Objekte zu detektieren, die sich in eine Schutzzone hinein bewegen, woraufhin dann eine bestimmte Aktion, beispielsweise ein Warnsignal oder ein Abschalten einer Maschine ausgelöst wird. Insbesondere wenn die genannten Verfahren und Vorrichtungen zur Absicherung gefährlicher Maschinen eingesetzt werden, ist es wichtig, daß in die Schutzzone eindringende Objekte zuverlässig erkannt werden, was bedeutet, daß zum einen die Funktionsfähigkeit der Vorrichtung ständig geprüft und zum anderen sichergestellt werden muß, daß die Vorrichtung nicht manipulierbar ist.

Diese Aufgabe wird gemäß eines erfindungsgemäßen Verfahrens dadurch gelöst,
daß zumindest zwei, einen Winkel zwischen sich einschließende Lichtstrahlen ausgesandt werden,
daß bei innerhalb der Schutzzone vorhandenem Objekt ein erster, von dem Objekt reflektierter/remittierter Lichtstrahl empfangen wird,
daß bei objektfreier Schutzzone ein zweiter, von einem außerhalb der Schutzzone befindlichen Ort reflektierter/remittierter Lichtstrahl empfangen wird, und
daß der Abstand sowohl des Objekts als auch des zweiten Orts von der Vorrichtung bestimmt wird.

Gemäß einer erfindungsgemäßen Vorrichtung wird die genannte Aufgabe dadurch gelöst,
daß die Sendeeinheit zur Aussendung von zumindest zwei, einen Winkel zwischen sich einschließenden Lichtstrahlen ausgelegt ist,
daß die Empfangseinheit zum Empfang eines ersten, von einem innerhalb der Schutzzone befindlichen Objekt und eines zweiten, von einem außerhalb der Schutzzone befindlichen Ort reflektierten/remittierten Lichtstrahls ausgelegt ist, und
daß die Auswerteeinheit zur Bestimmung des Abstandes sowohl des Objekts als auch des außerhalb der Schutzzone liegenden Orts von der Vorrichtung ausgelegt ist.

Erfindungsgemäß wird also nicht nur mit einem, sondern zumindest mit zwei Lichtstrahlen gearbeitet, die unterschiedlich orientiert sind. Der zweite Lichtstrahl ist dabei so orientiert, daß er von einem Ort reflektiert/remittiert wird, der außerhalb der Schutzzone liegt, sofern der Lichtweg dieses Lichtstrahls nicht durch ein innerhalb der Schutzzone vorhandenes Objekt unterbrochen ist. Der erste Lichtstrahl ist so orientiert, daß er bei einem in der Schutzzone vorhandenen Objekt von diesem Objekt reflektiert/remittiert wird. Bei objektfreier Schutzzone muß der erste Lichtstrahl nicht zwangsläufig so orientiert sein, daß er von einem außerhalb der Schutzzone befindlichen Ort reflektiert/remittiert wird, er kann vielmehr auch in das "Unendliche" gerichtet sein. Entscheidend für den ersten Lichtstrahl ist lediglich, daß er so orientiert ist, daß er bei in der Schutzzone vorhandenem, zu detektierendem Objekt auch tatsächlich auf dieses Objekt auftrifft.

Der erste Lichtstrahl dient erfindungsgemäß also dazu, ein in der Schutzzone vorhandenes Objekt zu detektieren, wohingegen der zweite Lichtstrahl dazu dient, ständig den außerhalb der Schutzzone gelegenen Hintergrund zu detektieren und/oder den Abstand dieses Hintergrunds von der Vorrichtung zu ermitteln. Dadurch wird es möglich, ständig aktiv die Funktionsfähigkeit der Vorrichtung zu überprüfen, da bei nicht erkanntem bzw. verschobenem Hintergrund entweder ein Objekt in der Schutzzone vorhanden ist oder eine Fehlfunktion bzw. eine Manipulation/Dejustage der Vorrichtung vorliegt.
Zudem wird es in bestimmten Fällen möglich, den Abstand eines innerhalb der Schutzzone befindlichen Objekts von der Vorrichtung durch beide Lichtstrahlen in redundanter Weise - und somit mit erhöhter Sicherheit - zu ermitteln, wobei eine gültige Messung nur dann vorliegt, wenn über beide Lichtstrahlen zumindest im wesentlichen das gleiche Abstandsergebnis erzielt wird.

Somit ermöglicht die Erfindung den Betrieb einer eingangs genannten Vorrichtung mit höchstmöglicher Sicherheit, da die Funktionsfähigkeit der Vorrichtung ständig überprüft werden kann, Manipulationen der Vorrichtung sofort erkannt sowie Dejustagen der Vorrichtungen ermittelt werden können und in bestimmten Anwendungsfällen durch redundante Messung auch die Sicherheit bei der Abstandsermittlung zwischen zu detektierendem Objekt und Vorrichtung erhöht werden kann.

Bevorzugt werden die ausgesandten Lichtstrahlen zum periodischen Abtasten der Schutzzone innerhalb einer Ebene, welche sich zumindest im wesentlichen senkrecht zu der von den ausgesandten Lichtstrahlen aufgespannten Ebene erstreckt, abgelenkt. Durch diese Maßnahme wird erreicht, daß nicht nur eine sich frontal, im wesentlichen auf einer geraden Linie vor der Vorrichtung erstreckende Schutzzone überwacht werden kann, sondern vielmehr die Überwachung eines die Vorrichtung umgebenden Winkelbereichs möglich wird. Ein solcher Winkelbereich kann beispielsweise 180° oder 360° betragen.

Bevorzugt ist es, wenn die jeweiligen Ablenkwinkel der ausgesandten Lichtstrahlen erfaßt werden, da dann aus den Abstandswerten und den zugehörigen Ablenkwinkeln die Positionen bestimmt werden können, von denen die Lichtstrahlen reflektiert/remittiert werden. Es kann dann also nicht mehr nur bestimmt werden, ob sich ein Objekt innerhalb der Schutzzone befindet, sondern es wird darüber hinaus möglich, die Position des Objektes innerhalb der Schutzzone zu ermitteln.

Die ermittelten Abstandswerte können mit zuvor gespeicherten Abstandswerten oder aus den Abstands- und Ablenkwinkelwerten ermittelte Positionen können mit zuvor gespeicherten Positionen verglichen werden. Ein Warn- oder Fehlersignal kann in diesem Fall beispielsweise dann erzeugt werden, wenn zwischen den ermittelten Abstandswerten und den zuvor gespeicherten Abstandswerten oder zwischen den ermittelten Positionen und den zuvor gespeicherten Positionen zumindest eine vorgegebene Abweichung auftritt. Darüber hinaus ist es möglich, bestimmte gespeicherte Abstandswerte bzw. Positionen als zulässige Abstandswerte bzw.

Positionen zu definieren, wobei dann kein Warn- oder Fehlersignal ausgegeben wird, wenn die aktuell ermittelten Abstandswerte bzw. Positionen diesen gespeicherten Abstandswerten oder Positionen entsprechen.

Von Vorteil ist es, wenn die Positionen der Schutzzonenbegrenzung gespeichert werden, da in diesem Fall ermittelt werden kann, ob sich ein Objekt innerhalb oder außerhalb der Schutzzone befindet. Bei außerhalb der Schutzzone befindlichem Objekt kann dann beispielsweise die Ausgabe eines Warn- oder Fehlersignals unterbleiben.

Bevorzugt ist es, wenn der zweite ausgesandte Lichtstrahl zumindest in einem ersten Ablenkwinkelbereich auf den Boden oder die Decke eines die Schutzzone umgebenden Bereichs gerichtet wird. Da sich die Lage des Bodens oder der Decke in der Regel während des Betriebs der Vorrichtung nicht verändert, wird auf diese Weise erreicht, daß der zweite ausgesandte Lichtstrahl bei objektfreier Schutzzone jeweils von unveränderten Positionen zurück zur Vorrichtung reflektiert/remittiert wird, so daß die über den zweiten Lichtstrahl gelieferte, den außerhalb der Schutzzone liegenden Hintergrund betreffende Information unveränderlich ist. Diese Variante der Erfindung ist somit vorteilhaft gegenüber einer alternativen Variante, bei der der zweite Lichtstrahl beispielsweise auch auf Wände und Türen gerichtet wird, da in diesem Fall beispielsweise das Öffnen einer Tür eine Veränderung der Hintergrundinformation bewirkt und somit zu der Auslösung eines Warn- oder Fehlersignals führen kann.

Es ist jedoch grundsätzlich auch möglich, daß der zweite ausgesandte Lichtstrahl in einem zweiten Ablenkwinkelbereich auf außerhalb der Schutzzone befindliche Gegenstände, wie zum Beispiel Wände oder stationäre Maschinen gerichtet wird. Diese Gegenstände sind jedoch aus dem genannten Grund bevorzugt relativ zur Vorrichtung unbeweglich.

Vorteilhaft ist es, wenn ein Referenzkontur ermittelt wird, indem der zweite Lichtstrahl den Boden oder die Decke eines die Schutzzone umgebenden Bereichs und/oder außerhalb der Schutzzone befindliche Gegenstände abtastet und jeweils derjenige Ort ermittelt wird, an dem der zweite Lichtstrahl reflektiert/remittiert wird. Diese Referenzkontur stellt dann ein Hintergrund-Referenzsignal dar; durch einen Vergleich einer aktuell ermittelten Hintergrund-Kontur mit der abgespeicherten Hintergrund-Referenzkontur kann festgestellt werden, ob im Hintergrund irgendwelche Veränderungen vorgenommen werden, die beispielsweise eine Manipulation der Vorrichtung bewirken sollen. In diesem Fall kann dann ein Warnsignal ausgegeben werden.

Der erste ausgesandte Lichtstrahl kann parallel oder geneigt zum Boden der Schutzzone verlaufen, so daß innerhalb der Schutzzone befindliche Objekte vom ersten Lichtstrahl erfaßbar sind. Dabei kommt es darauf an, daß der erste Lichtstrahl so orientiert ist, daß grundsätzlich alle, an beliebigen Positionen innerhalb der Schutzzone befindlichen Objekte vom ersten Lichtstrahl erfaßt und somit erkannt werden können.

Ein "Schutzzone nicht frei"-Signal kann bereits dann generiert werden, wenn der erste ausgesandte Lichtstrahl innerhalb der Schutzzone ein unzulässiges Objekt detektiert.

Ein Signal "Schutzzone frei" wird bevorzugt dann generiert, wenn mittels des zweiten Lichtstrahls der Boden oder die Decke eines die Schutzzone umgebenden Bereichs detektiert wird und zugleich der erste ausgesandte Lichtstrahl nicht von einem innerhalb der Schutzzone befindlichen unzulässigen Objekt reflektiert/remittiert wird. Das Detektieren des die Schutzzone umgebenden Bereichs mittels des zweiten Lichtstrahls stellt dabei sicher, daß die Vorrichtung funktionsfähig ist und keine Dejustage/Manipulationen auftreten, während der erste Lichtstrahl sicherstellt, daß sich innerhalb der Schutzzone kein unzulässiges Objekt befindet.

Ein "Schutzzone frei"-Signal kann jedoch alternativ auch erst dann generiert werden, wenn die mittels des zweiten Lichtstrahls ermittelte Kontur nicht oder nur innerhalb von vorgegebenen Schwellwerten von einer gespeicherten Referenzkontur abweicht und zugleich der erste ausgesandte Lichtstrahl nicht von einem innerhalb der Schutzzone befindlichen unzulässigen Objekt reflektiert/remittiert wird. Bei dieser Variante wird also nicht nur gefordert, daß mittels des zweiten Lichtstrahls der Hintergrund bzw. der die Schutzzone umgebende Bereich "erkannt" bzw. detektiert wird, sondern es muß zusätzlich die aktuell ermittelte Hintergrund-Kontur zumindest innerhalb vorgegebener Grenzen mit einer abgespeicherten Hintergrund-Kontur übereinstimmen. Auf diese Weise können beispielsweise Dejustagen oder Manipulationen zuverlässig erkannt werden.

Von Vorteil ist es, wenn mittels des zweiten Lichtstrahls in bestimmten Zeitabständen die jeweils aktuelle Kontur des Hintergrunds ermittelt und mit der gespeicherten Referenzkontur und der gespeicherten Hintergrund-Referenzkontur verglichen wird, wobei ein Dejustage- oder Manipulationssignal erzeugt wird, wenn die aktuelle Kontur zumindest in einem vorgegebenen Maß von der Hintergrund-Referenzkontur abweicht.

Zur zusätzlichen Erhöhung der Sicherheit kann zumindest ein weiterer ausgesandter Lichtstrahl zumindest in einem ersten Ablenkwinkelbereich auf dem Boden oder die Decke eines die Schutzzone umgebenden Bereichs gerichtet werden. Insbesondere kann dieser weitere ausgesandte Lichtstrahl in einem zweiten Ablenkwinkelbereich auf außerhalb der Schutzzone befindliche Gegenstände, wie zum Beispiel Wände oder stationäre Maschinen gerichtet werden. Auf diese Weise kann der erfindungsgemäße zweite Lichtstrahl gewissermaßen "dupliziert" werden, wobei die die Schutzzone umgebenden Bereiche abtastenden Lichtstrahlen unterschiedlich orientiert sein können, so daß sie jeweils voneinander verschiedene Hintergrundinformationen liefern.

Ebenso ist es möglich, den ersten erfindungsgemäßen Lichtstrahl zu "duplizieren", indem zumindest ein weiterer ausgesandter Lichtstrahl parallel oder geneigt zum Boden der Schutzzone verläuft, so daß wiederum alle innerhalb der Schutzzone befindlichen Objekte von diesem weiteren Lichtstrahl erfaßbar sind. In diesem Fall ist es dann beispielsweise möglich, daß der Abstand zwischen der Vorrichtung und einem innerhalb der Schutzzone befindlichen Objekt in redundanter Weise über zumindest zwei ausgesandte Lichtstrahlen bestimmt wird und ein "Schutzzone frei"-Signal nur dann generiert wird, wenn sich die ermittelten Abstandswerte nicht oder nur innerhalb einer vorgegebenen Toleranz voneinander unterscheiden. Diese redundante Abstandsbestimmung bewirkt eine weitere Erhöhung der Sicherheit.

Die Lichtstrahlen können in Form von Lichtimpulsen erzeugt werden, wobei die Abstandswerte dann über die jeweilige Lichtlaufzeit berechnet werden. Alternativ können die Abstandswerte jedoch auch über eine Triangulationsmessung ermittelt werden.

Besonders vorteilhaft ist es, wenn zumindest ein, bevorzugt alle ausgesandten Lichtstrahlen über ein reflektierendes/remittierendes, bevorzugt innerhalb der Vorrichtung angeordnetes Referenzziel geführt werden. Durch diese Maßnahme kann laufend überprüft werden, ob alle für die Aussendung der Lichtstrahlen verantwortlichen Lichtsender ordnungsgemäß funktionieren.

Weiterhin kann der Abstand zum Referenzziel in redundanter Weise über zumindest zwei ausgesandte Lichtstrahlen bestimmt werden. Dadurch ist überprüfbar, ob die Abstandsermittlung ordnungsgemäß funktioniert, da bei Ermittlung zweier unterschiedlicher Abstände zum Referenzziel ein Warnsignal abgegeben werden kann. Ein Signal "Schutzzone frei" kann in diesem Fall nur dann generiert werden, wenn sich die ermittelten Abstandswerte nicht oder nur innerhalb einer vorgegebenen Toleranz voneinander unterscheiden.

Wie bereits erläutert, kann die der Erfindung zugrundeliegende Aufgabe durch eine erfindungsgemäße Vorrichtung dadurch gelöst werden,
daß die Sendeeinheit zur Aussendung von zumindest zwei, einen Winkel zwischen sich einschließenden Lichtstrahlen ausgelegt ist,
daß die Empfangseinheit zum Empfang eines ersten, von einem innerhalb der Schutzzone befindlichen Objekt und eines zweiten, von einem außerhalb der Schutzzone befindlichen Ort reflektierten/remittierten Lichtstrahls ausgelegt ist, und
daß die Auswerteeinheit zur Bestimmung des Abstandes sowohl des Objekts als auch des außerhalb der Schutzzone liegenden Orts von der Vorrichtung ausgelegt ist.

Mittels der erfindungsgemäßen Vorrichtung können die gleichen Vorteile erreicht werden, die vorstehend in Verbindung mit dem erfindungsgemäßen Verfahren bereits erläutert wurden. Zudem kann die erfindungsgemäße Vorrichtung mit zusätzlichen Mitteln versehen werden, die zur Durchführung all derjenigen Verfahrensvarianten geeignet sind, die vorstehend als bevorzugt oder vorteilhaft beschrieben wurden.

Bevorzugt wird die erfindungsgemäße Vorrichtung mit einer Lichtablenkeinheit, insbesondere einem Prismenkopf zur Ablenkung der ausgesandten Lichtstrahlen innerhalb einer Ebene ausgestattet, wobei sich die genannte Ebene zumindest im wesentlichen senkrecht zu der von den ausgesandten Lichtstrahlen aufgespannten Ebene erstreckt. Durch eine solche Lichtablenkeinheit kann der vorstehend bereits erläuterte Vorteil der Überwachung eines die Vorrichtung umgebenden Winkelbereichs erreicht werden.

Ferner kann eine Winkelerfassungseinheit zur Ermittlung des jeweiligen Ablenkwinkels der ausgesandten Lichtstrahlen vorgesehen werden. Mittels dieser Winkelerfassungseinheit in Kombination mit der Auswerteeinheit zur Bestimmung des Abstandes kann die Position von Objekten innerhalb und außerhalb der Schutzzone ermittelt werden.

Der erste und zweite Lichtstrahl kann mittels eines Strahlenfächers erzeugt werden, welcher mit einem einzigen Lichtsender der Sendeeinheit zusammenwirkt. Ebenso ist es jedoch auch möglich, die Sendeeinheit mit zumindest zwei Lichtsendern auszustatten, die zumindest den ersten und den zweiten Lichtstrahl entweder gleichzeitig oder im Zeitmultiplex erzeugen.

Die Empfangseinheit kann mit nur einem einzelnen Lichtempfänger ausgestattet werden, welcher zum im Zeitmultiplex erfolgenden Empfang zumindest des ersten und zweiten Lichtstrahls ausgelegt ist. Ebenso ist es jedoch auch möglich, die Empfangseinheit als Doppel- oder Mehrfachempfänger auszubilden, wobei dann für jeden Lichtstrahl ein separater Empfänger zur Verfügung steht.

Besonders vorteilhaft ist es, wenn ein zusätzlicher Empfänger zum Empfang eines von der Sendeeinheit ausgesandten und innerhalb der Vorrichtung zum zusätzlichen Empfänger geleiteten Lichtsignals vorgesehen wird. Mittels dieses zusätzlichen Empfängers ist es möglich, die Funktion der Sendeeinheit permanent zu überwachen.

Vorteilhaft ist es weiterhin, wenn ein reflektierendes oder remittierendes, bevorzugt innerhalb der Vorrichtung angeordnetes Referenzziel vorgesehen wird, welches von einem, mehreren oder allen ausgesandten Lichtstrahlen erfaßt wird. Mit diesem Referenzziel lassen sich diejenigen Vorteile erreichen, die in Zusammenhang mit dem entsprechenden bevorzugten erfindungsgemäßen Verfahren bereits beschrieben wurden.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen beschrieben; in diesen zeigen:
- Fig. 1a: eine schematisierte Seitenansicht einer Anordnung zur Durchführung des erfindungsgemäßen Verfahrens,
- Fig. 1b: eine Draufsicht auf die Anordnung gemäß Fig. 1a,
- Fig. 2a: eine Seitenansicht gemäß Fig. 1a mit einem im Hintergrund befindlichen Gegenstand,
- Fig. 2b: eine Draufsicht auf eine Anordnung gemäß Fig. 2a,
- Fig. 3a: eine Seitenansicht gemäß Fig. 1a mit einem ersten in der Schutzzone befindlichen Gegenstand,
- Fig. 3b: eine Draufsicht auf die Anordnung gemäß Fig. 3a,
- Fig. 4a: eine Seitenansicht gemäß Fig. 1a mit einem zweiten in der Schutzzone befindlichen Gegenstand, und
- Fig. 4b: eine Draufsicht auf eine Anordnung gemäß Fig. 4a.

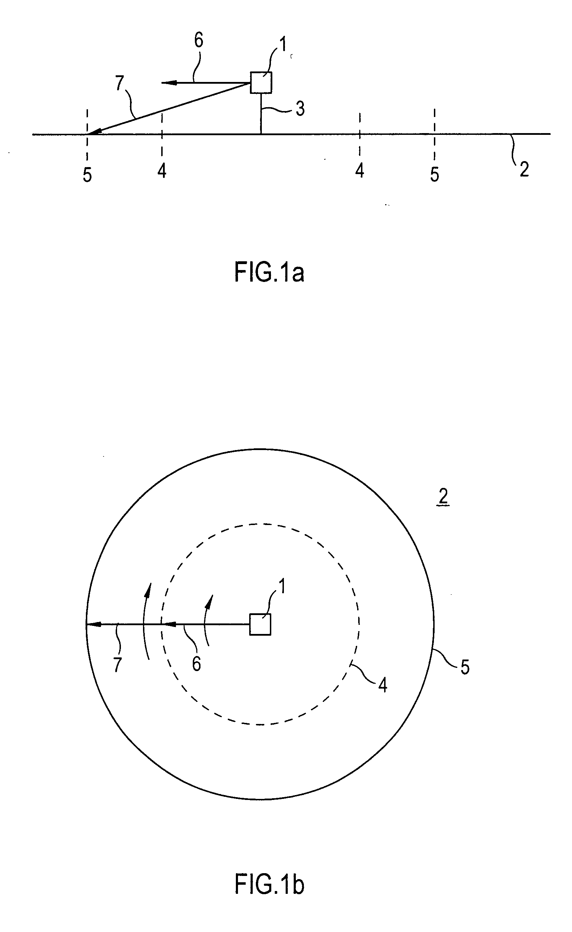

Die Fig. 1a und 1b zeigen eine erfindungsgemäße Vorrichtung 1, die mittels eines Ständers 3 auf einem Bodenbereich 2 montiert ist.

Die Vorrichtung 1 ist von einer Schutzzone umgeben, deren äußere Umrandung durch die gestrichelte Linie 4 gekennzeichnet ist. Die Schutzzone umgibt somit die Vorrichtung 1 in einem Winkelbereich von 360°.

Von der Vorrichtung 1 wird ein erster Lichtstrahl 6 parallel zum Boden 2 ausgesandt. Weiterhin wird von der Vorrichtung 1 ein weiterer Lichtstrahl 7 ausgesandt, welcher schräg nach unten in der Weise auf den Boden 2 gerichtet ist, daß er außerhalb der Schutzzonenbegrenzung 4 auf den Boden 2 auftrifft.

Beide Lichtstrahlen 6, 7 werden mittels einer in der Vorrichtung 1 vorhandenen Ablenkeinheit über einen Winkelbereich von 360° in Pfeilrichtung (Fig. 1b) abgelenkt. Diese Ablenkung bewirkt, daß der erste Lichtstrahl 6 alle Objekte erfassen würde, die sich auf Höhe der Vorrichtung 1 innerhalb der Schutzzonenbegrenzung 4 befinden. Weiterhin bewirkt die genannte Ablenkung, daß der zweite Lichtstrahl 7 entlang einer Linie 5 auf den Boden 2 auftrifft, wobei sich diese Linie 5 vollständig außerhalb der Schutzzonenbegrenzung 4 erstreckt.

Folglich ist bei objektfreier Schutzzone der erste Lichtstrahl 6 immer in das Unendliche gerichtet und liefert - da in der Schutzzone keine Objekte vorhanden sind - ausschließlich Abstandswerte, die Entfernungen zwischen der Vorrichtung 1 und außerhalb der Schutzzone 4 angeordneten Objekten repräsentieren. Aufgrund dieser Abstandswerte erfolgt keine Warnsignalabgabe, da diese Abstandswerte klar zeigen, daß innerhalb der Schutzzone kein Objekt vorhanden ist.

Der zweite Lichtstrahl 7 wird ständig vom Boden 2 entlang der Linie 5 zur Vorrichtung 1 zurückreflektiert/remittiert, so daß hier permanent Abstandswerte ermittelt werden, die den Abstand zwischen der Vorrichtung 1 und der Linie 5 repräsentieren. Das Vorliegen dieser Abstandswerte bestätigt eine einwandfreie Funktion des Gerätes. Wenn diese Abstandswerte mit zuvor bereits gespeicherten Soll-Abstandswerten (Referenz-Hintergrundkontur) verglichen werden, kann darüber hinaus festgestellt werden, wenn die Vorrichtung 1 oder die Umgebung dejustiert bzw. manipuliert werden. In diesem Fall kann dann ein Fehlersignal ausgegeben werden. Solange jedoch die mittels des zweiten Lichtstrahls 7 ermittelten Abstandswerte mit den gespeicherten Abstandswerten zumindest innerhalb vorgegebener Grenzen übereinstimmen, wird eine fehlerfreie Funktion des Gerätes 1 signalisiert.

Ein "Schutzzone frei"-Signal wird also immer dann abgegeben, wenn der erste Lichtstrahl 6 nur Abstandswerte liefert, die auf Gegenstände schließen lassen, die sich außerhalb der Schutzzone 4 befinden und wenn das zweite Lichtsignal 7 permanent Abstandswerte liefert, die einer gespeicherten Hintergrund-Referenzkontur entsprechen.

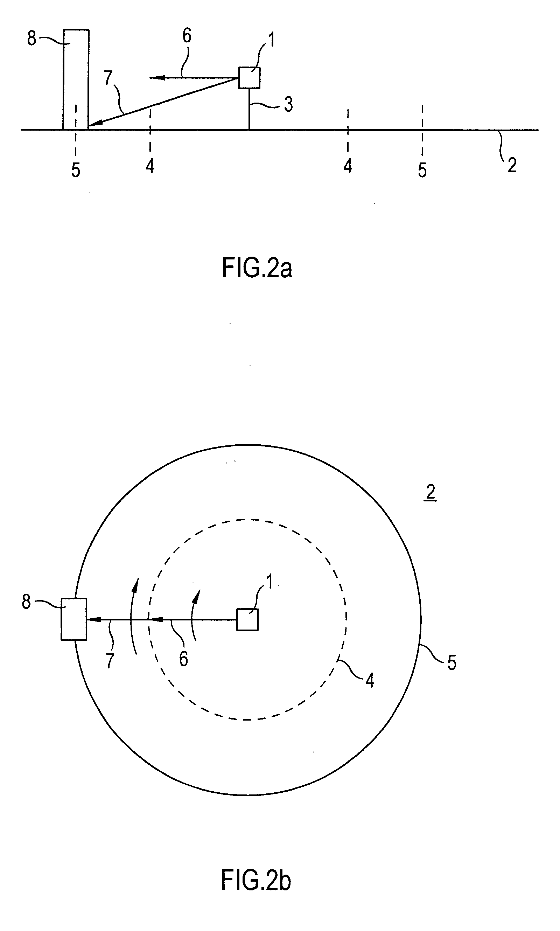

Die Anordnung gemäß den Fig. 2a, 2b entspricht im wesentlichen der Anordnung gemäß den Fig. 1a, 1b mit dem Unterschied, daß der zweite Lichtstrahl 7 nicht über den gesamten Winkelbereich von 360° auf den Boden 2 auftrifft, sondern in einem vergleichsweise kleinen Winkelbereich von einem Gegenstand 8 reflektiert/remittiert wird, welcher sich außerhalb der Schutzzonenbegrenzung 4 befindet. Bei dem Gegenstand 8 handelt es sich um einen stationären Gegenstand, welcher relativ zur Vorrichtung 1 keinerlei Bewegungen ausführt.

Das Vorhandensein des genannten Gegenstands 8 ermöglicht die gleiche Betriebsweise der Anordnung, wie sie in Verbindung mit den Fig. 1a, b erläutert wurde. Der einzige Unterschied besteht darin, daß hier im Vergleich zu den Fig. 1a, b eine etwas veränderte Hintergrund-Referenzkontur gespeichert wird. Die mittels des zweiten Lichtstrahls 7 ermittelten Abstände entsprechen nämlich in demjenigen Winkelbereich, in dem der zweite Lichtstrahl 7 auf den Gegenstand 8 auftrifft, dem Abstand zwischen der Vorrichtung 1 und den jeweiligen, auf dem Gegenstand 8 befindlichen Reflexions-/ Remissionspunkten. Bei einer entsprechend angepaßten Hintergrund-Referenzkontur "erwartet" die Vorrichtung 1 also in dem Winkelbereich, in dem der zweite Lichtstrahl auf den Gegenstand 8 auftrifft, geringere Abstände, als in demjenigen Winkelbereich, in dem der zweite Lichtstrahl 7 entlang der Linie 5 auf den Boden 2 auftrifft.

Solange sich der Gegenstand 8 also nicht bewegt und solange er außerhalb der Schutzzonenbegrenzung 4 angeordnet ist, funktioniert die Anordnung gemäß den Fig. 2a und b entsprechend wie die Anordnung gemäß den Fig. 1a und b.

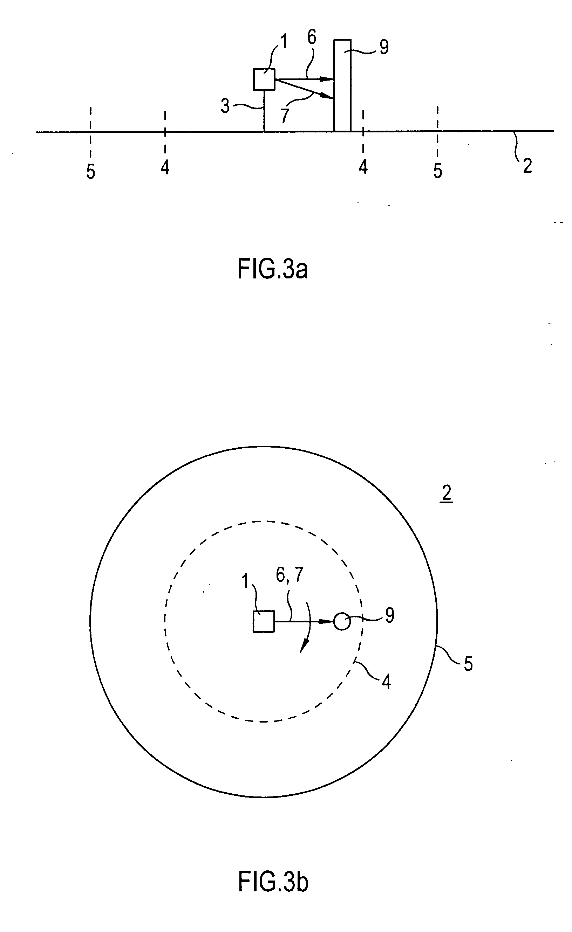

Fig. 3a, b zeigen eine Anordnung gemäß Fig. 1a, b mit einem innerhalb der Schutzzonenbegrenzung 4 angeordneten Gegenstand 9. Der Gegenstand 9 erstreckt sich vertikal derart, daß beide Lichtstrahlen 6, 7 auf diesen Gegenstand 9 auftreffen. Insofern liefern beide Lichtstrahlen 6, 7 Abstandswerte, die den Abstand zwischen der Vorrichtung 1 und den entsprechenden Reflexions-/Remissionspunkten auf dem Gegenstand 9 repräsentieren. Da der mittels des Lichtstrahls 6 ermittelte Abstand geringer ist, als der Abstand der Vorrichtung 1 von der Schutzzonenbegrenzung 4, wird ein Warnsignal ausgelöst, das das innerhalb der Schutzzonenbegrenzung 4 vorhandene Objekt 9 anzeigt. Da bereits mittels des ersten Lichtstrahls 6 ein Abstand ermittelt wird, welcher die Auslösung eines Warnsignals bewirkt, ist der mittels des zweiten Lichtstrahls 7 ermittelte Abstandswert, der in diesem Fall natürlich nicht den Abstand der Reflexionslinie 5 von der Vorrichtung 1 repräsentiert, irrelevant.

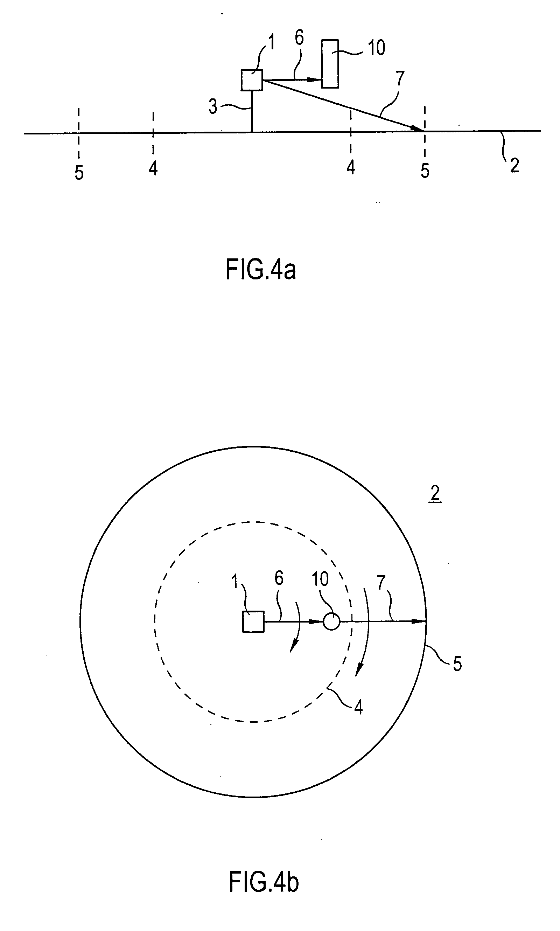

Fig. 4a, b zeigt eine Anordnung, die im wesentlichen den Fig. 3a, b entspricht, mit dem einzigen Unterschied, daß sich der innerhalb der Schutzzonenbegrenzung 4 vorhandene Gegenstand 10 nicht vertikal bis zum Boden 2 erstreckt. Vielmehr ist der Gegenstand 10 so angeordnet, daß er vom ersten Lichtstrahl 6 erfaßt wird, während der zweite Lichtstrahl 7 unter dem Gegenstand 10 verläuft und - wie bei objektfreier Schutzzone - von der auf dem Boden 2 befindlichen Reflexionslinie 5 reflektiert wird.

Wie bereits in Verbindung mit Fig. 3a, b erläutert, ist jedoch der mittels des zweiten Lichtstrahls 7 ermittelte Abstand irrelevant, sofern bereits der erste Lichtstrahl 6 einen Abstandswert liefert, der auf ein innerhalb der Schutzzonenbegrenzung 4 angeordnetes Objekt 10 hindeutet. Insofern wird auch bei der Anordnung gemäß Fig. 4a, b ein Warnsignal abgegeben.

### Bezugszeichenliste

- 1: Vorrichtung
- 2: Boden
- 3: Ständer
- 4: Schutzzonenbegrenzung
- 5: Reflexionslinie
- 6: erster Lichtstrahl
- 7: zweiter Lichtstrahl
- 8: Gegenstand
- 9: Objekt
- 10: Objekt

## Patentansprüche

1. Verfahren zur Überwachung einer Schutzzone (4), bei dem von einer Vorrichtung (1) ein Lichtstrahl (6) in Richtung der Schutzzone (4) ausgesandt, ein von einem in der Schutzzone (4) befindlichen Objekt (9, 10) reflektierter/remittierter Lichtstrahl (6) empfangen und der Abstand zwischen der Vorrichtung (1) und dem Objekt (9, 10) bestimmt wird,
**dadurch gekennzeichnet,**
**daß** zumindest zwei, einen Winkel zwischen sich einschließende Lichtstrahlen (6, 7) ausgesandt werden,
**daß** bei innerhalb der Schutzzone (4) vorhandenem Objekt (9, 10) ein erster, von dem Objekt (9, 10) reflektierter/remittierter Lichtstrahl (6) empfangen wird,
**daß** bei objektfreier Schutzzone (4) ein zweiter, von einem außerhalb der Schutzzone (4) befindlichen Ort (5) reflektierter/remittierter Lichtstrahl (7) empfangen wird, und
**daß** der Abstand sowohl des Objekts (9, 10) als auch des zweiten Orts (5) von der Vorrichtung (1) bestimmt wird.

2. Verfahren nach Anspruch 1,
**dadurch gekennzeichnet,**
**daß** die ausgesandten Lichtstrahlen (6, 7) zum periodischen Abtasten der Schutzzone (4) innerhalb einer Ebene, welche sich zumindest im wesentlichen senkrecht zu der von den ausgesandten Lichtstrahlen (6, 7) aufgespannten Ebene erstreckt, abgelenkt werden, wobei insbesondere die jeweiligen Ablenkwinkel der ausgesandten Lichtstrahlen (6, 7) erfaßt werden und/oder aus den Abstandswerten und den zugehörigen Ablenkwinkeln die Positionen bestimmt werden, von den die Lichtstrahlen (6, 7) reflektiert/remittiert werden.

3. Verfahren nach einem der vorhergehenden Ansprüche,
**dadurch gekennzeichnet,**
**daß** die ermittelten Abstandswerte mit zuvor gespeicherten Abstandswerten oder aus den Abstands- und Ablenkwinkelwerten ermittelte Positionen mit zuvor gespeicherten Positionen verglichen werden, wobei insbesondere ein Warn- oder Fehlersignal erzeugt wird, wenn zwischen den ermittelten Abstandswerten und den zuvor gespeicherten Abstandswerten oder zwischen den ermittelten Positionen und den zuvor gespeicherten Positionen zumindest eine vorgegebene Abweichung auftritt.

4. Verfahren nach einem der vorhergehenden Ansprüche,
**dadurch gekennzeichnet,**
**daß** die Positionen der Schutzzonenbegrenzung (4) gespeichert werden.

5. Verfahren nach einem der vorhergehenden Ansprüche,
**dadurch gekennzeichnet,**
**daß** der zweite ausgesandte Lichtstrahl (7) zumindest in einem ersten Ablenkwinkelbereich auf den Boden (2) oder die Decke eines die Schutzzone (4) umgebenden Bereichs gerichtet wird, wobei insbesondere der zweite ausgesandte Lichtstrahl (7) in einem zweiten Ablenkwinkelbereich auf außerhalb der Schutzzone (4) befindliche Gegenstände (8), wie z.B. Wände oder stationäre Maschinen gerichtet wird.

6. Verfahren nach einem der vorhergehenden Ansprüche,
**dadurch gekennzeichnet,**
**daß** eine Referenzkontur ermittelt wird, indem der zweite Lichtstrahl (7) den Boden (2) oder die Decke eines die Schutzzone (4) umgebenden Bereichs und/oder außerhalb der Schutzzone befindliche Gegenstände (8) abtastet und jeweils derjenige Ort ermittelt wird, an dem der zweite Lichtstrahl (7) reflektiert/remittiert wird.

7. Verfahren nach einem der vorhergehenden Ansprüche,
**dadurch gekennzeichnet,**
**daß** der erste ausgesandte Lichtstrahl (6) parallel oder geneigt zum Boden (2) der Schutzzone (9) verläuft, so daß alle innerhalb der Schutzzone (4) befindlichen Objekte (9, 10) vom ersten Lichtstrahl (6) erfaßbar sind.

8. Verfahren nach einem der vorhergehenden Ansprüche,
**dadurch gekennzeichnet,**
**daß** ein Signal "Schutzzone nicht frei" bereits dann generiert wird, wenn der erste ausgesandte Lichtstrahl (6) innerhalb der Schutzzone (4) ein unzulässiges Objekt (9, 10) detektiert, und/oder daß ein Signal "Schutzzone frei" generiert wird, wenn mittels des zweiten Lichtstrahls (7) der Boden (2) oder die Decke eines die Schutzzone (4) umgebenden Bereichs detektiert und zugleich der erste ausgesandte Lichtstrahl (6) nicht von einem innerhalb der Schutzzone (4) befindlichen unzulässigen Objekt (9, 10) reflektiert/remittiert wird.

9. Verfahren nach einem der Ansprüche 6 bis 8,
**dadurch gekennzeichnet,**
**daß** ein "Schutzzone frei"-Signal generiert wird, wenn die mittels des zweiten Lichtstrahls (7) ermittelte Kontur (5) nicht oder nur innerhalb von vorgegebenen Schwellwerten von der Referenzkontur abweicht und zugleich der erste ausgesandte Lichtstrahl (6) nicht von einem innerhalb der Schutzzone (4) befindlichen unzulässigen Objekt (9, 10) reflektiert/remittiert wird.

10. Verfahren nach einem der Ansprüche 6 bis 9,
**dadurch gekennzeichnet,**
**daß** mittels des zweiten Lichtstrahls (7) in bestimmten Zeitabständen die jeweils aktuelle Kontur (5) ermittelt und mit der gespeicherten Referenzkontur verglichen wird, wobei ein Dejustage- oder Manipulationssignal erzeugt wird, wenn die aktuelle Kontur (5) zumindest in einem vorgegebenen Maß von der Referenzkontur abweicht.

11. Verfahren nach einem der vorhergehenden Ansprüche,
**dadurch gekennzeichnet,**
**daß** zumindest ein weiterer ausgesandter Lichtstrahl zumindest in einem ersten Ablenkwinkelbereich auf den Boden (2) oder die Decke eines die Schutzzone (4) umgebenden Bereichs gerichtet wird und insbesondere
**daß** der weitere ausgesandte Lichtstrahl in einem zweiten Ablenkwinkelbereich auf außerhalb der Schutzzone befindliche Gegenstände (8), wie z.B. Wände oder stationäre Maschinen gerichtet wird.

12. Verfahren nach einem der vorhergehenden Ansprüche,
**dadurch gekennzeichnet,**
**daß** zumindest ein weiterer ausgesandter Lichtstrahl parallel oder geneigt zum Boden (2) der Schutzzone (4) verläuft, so daß alle innerhalb der Schutzzone (4) befindlichen Objekte (9, 10) von diesem weiteren Lichtstrahl erfaßbar sind.

13. Verfahren nach einem der vorhergehenden Ansprüche,
**dadurch gekennzeichnet,**
**daß** die Lichtstrahlen (6, 7) in Form von Lichtimpulsen erzeugt und die Abstandswerte über die jeweilige Lichtlaufzeit oder über eine Triangulationsmessung ermittelt werden.

14. Verfahren nach einem der vorhergehenden Ansprüche,
**dadurch gekennzeichnet,**
**daß** der Abstand zwischen der Vorrichtung (1) und einem innerhalb der Schutzzone (4) befindlichen Objekt (9, 10) in redundanter Weise über zumindest zwei ausgesandte Lichtstrahlen bestimmt wird und ein "Schutzzone frei"-Signal nur dann generiert werden kann, wenn sich die ermittelten Abstandswerte nicht oder nur innerhalb einer vorgegebenen Toleranz voneinander unterscheiden.

15. Verfahren nach einem der vorhergehenden Ansprüche,
**dadurch gekennzeichnet,**
**daß** alle ausgesandten Lichtstrahlen (6, 7) über ein reflektierendes/remittierendes, bevorzugt innerhalb der Vorrichtung angeordnetes Referenzziel geführt werden, wobei insbesondere der Abstand zum Referenzziel in redundanter Weise über zumindest zwei ausgesandte Lichtstrahlen bestimmt wird und ein Signal "Schutzzone frei" nur dann generiert werden kann, wenn sich die ermittelten Abstandswerte nicht oder nur innerhalb einer vorgegebenen Toleranz voneinander unterscheiden.

16. Vorrichtung zur Überwachung einer Schutzzone (4) mit einer Sendeeinheit zur Aussendung eines Lichtstrahls (6) in Richtung der Schutzzone(4) , einer Empfangseinheit zum Empfang eines von einem in der Schutzzone (4) befindlichen Objekt (9, 10) reflektierten/remittierten Lichtstrahls und einer Auswerteeinheit zur Bestimmung des Abstandes zwischen der Vorrichtung (1) und dem Objekt (9, 10),
**dadurch gekennzeichnet,**
**daß** die Sendeeinheit zur Aussendung von zumindest zwei, einen Winkel zwischen sich einschließenden Lichtstrahlen (6, 7) ausgelegt ist,
**daß** die Empfangseinheit zum Empfang eines ersten, von einem innerhalb der Schutzzone befindlichen Objekt (9, 10) und eines zweiten, von einem außerhalb der Schutzzone (4) befindlichen Ort (5) reflektierten/remittierten Lichtstrahls (6, 7) ausgelegt ist, und
**daß** die Auswerteeinheit zur Bestimmung des Abstandes sowohl des Objekts (9, 10) als auch des außerhalb der Schutzzone liegenden Orts (5) von der Vorrichtung (1) ausgelegt ist.

17. Vorrichtung nach Anspruch 16,
**gekennzeichnet durch**
eine Lichtablenkeinheit, insbesondere einen Prismenkopf zur Ablenkung der ausgesandten Lichtstrahlen (6, 7) innerhalb einer Ebene, welche sich zumindest im wesentlichen senkrecht zu der von den ausgesandten Lichtstrahlen (6, 7) aufgespannten Ebene erstreckt.

18. Vorrichtung nach einem der Ansprüche 16 oder 17, **gekennzeichnet durch**
eine Winkelerfassungseinheit zur Ermittlung des jeweiligen Ablenkwinkels der ausgesandten Lichtstrahlen (6, 7).

19. Vorrichtung nach einem der Ansprüche 16 bis 18,
**dadurch gekennzeichnet,**
**daß** die Sendeeinheit einen einzigen Lichtsender zur Erzeugung zumindest des ersten und zweiten Lichtstrahls (6, 7) mittels eines Strahlenfächers umfasst, oder daß die Sendeeinheit zumindest zwei Lichtsender zur gleichzeitig oder im Zeitmultiplex erfolgenden Erzeugung zumindest des ersten und zweiten Lichtstrahls (6, 7) umfaßt.

20. Vorrichtung nach einem der Ansprüche 16 bis 19,
**dadurch gekennzeichnet,**
**daß** die Empfangseinheit nur einen einzelnen Lichtempfänger zum im Zeitmultiplex erfolgenden Empfang zumindest des ersten und des zweiten Lichtstrahls (6, 7) umfasst, oder daß die Empfangseinheit als Doppel- oder Mehrfachempfänger ausgebildet ist.

21. Vorrichtung nach einem der Ansprüche 16 bis 20, **gekennzeichnet durch**
einen zusätzlichen Empfänger zum Empfang eines von der Sendeeinheit ausgesandten und innerhalb der Vorrichtung zum zusätzlichen Empfänger geleiteten Lichtsignals.

22. Vorrichtung nach einem der Ansprüche 16 bis 21, **gekennzeichnet durch**
ein reflektierendes oder remittierendes, bevorzugt innerhalb der Vorrichtung angeordnetes Referenzziel, welches von allen ausgesandten Lichtstrahlen (6, 7) erfaßt wird.

23. Vorrichtung nach einem der Ansprüche 16 bis 22, **gekennzeichnet durch**
eine Vergleichseinheit zum Vergleich der ermittelten Abstandswerte mit zuvor gespeicherten Abstandswerten oder zum Vergleich von aus den Abstands- und Ablenkwinkelwerten ermittelten Positionen mit zuvor gespeicherten Positionen.
